# EUROPÄISCHE PATENTSCHRIFT

(11) **EP 3 693 932 B1**
(45) Veröffentlichungstag und Bekanntmachung des Hinweises auf die Patenterteilung: **15.12.2021**
(21) Anmeldenummer: 19156004.4
(22) Anmeldetag: 07.02.2019
(51) Int. Cl.: G07C 9/37, G07C 9/00, H04M 1/02, H04N 7/18

(54) **TÜRKOMMUNIKATIONSANLAGE FÜR EINE WOHN- ODER GEWERBEANLAGE MIT EINER VIELZAHL WOHN- ODER GEWERBEEINHEITEN UND EIN ENTSPRECHENDES VERFAHREN**
DOOR COMMUNICATION SYSTEM FOR A RESIDENTIAL OR COMMERCIAL SYSTEM WITH A PLURALITY OF RESIDENTIAL OR COMMERCIAL UNITS AND CORRESPONDING METHOD
INSTALLATION DE COMMUNICATION DE PORTE POUR UNE INSTALLATION RÉSIDENTIELLE OU COMMERCIALE DOTÉE D'UNE PLURALITÉ D'UNITÉS RÉSIDENTIELLES OU COMMERCIALES ET PROCÉDÉ CORRESPONDANT

(43) Veröffentlichungstag der Anmeldung: 12.08.2020
(73) Patentinhaber: GIRA GIERSIEPEN GmbH & Co. KG, 42477 Radevormwald (DE)
(72) Erfinder: Schimmelpfennig, Frank, 42477 Radevormwald (DE); Budweg, Mario, 42499 Hückeswagen (DE)
(74) Vertreter: Angerhausen, Christoph

(56) Entgegenhaltungen:
- DE-A1-102010 051 836
- DE-A1-102012 010 018

## Beschreibung

Die Erfindung geht aus von einer Türkommunikationsanlage für eine Wohn- oder Gewerbeanlage mit einer Vielzahl Wohn- oder Gewerbeeinheiten, wobei die Türkommunikationsanlage eine Türstation mit einem Rufdisplay und einen Speicher aufweist. Eine derartige Türkommunikationsanlage ist aus der DE 10 2012 010 018 A1 und der EP 1 320 244 B1 bekannt. Ähnliche Türkommunikationsanlagen beschreiben auch die DE 10 2010 051 836 A1 und die EP 2 107 766 B1.

Bei den aus dem Stand der Technik bekannten Türkommunikationsanlagen, die eine audiovisuelle Kommunikation zwischen einem Besucher der Wohn- oder Gewerbeanlage und einem Bewohner der Anlage zulassen, ist bei kleineren Wohn- oder Gewerbeanlagen je Wohn- oder Gewerbeeinheit jeweils eine separate und beschriftete Klingeltaste vorgesehen, so dass für den Besucher klar ist, auf welche Weise er eine Verbindung mit der gewünschten Wohn- oder Gewerbeeinheit herstellen kann. In größeren Wohn- und Gewerbeeinheiten ist dies jedoch nicht praktikabel, da die Menge der erforderlichen Klingeltasten sowohl zu viel Fläche an der Gebäudewand oder auf einem separaten Tableau erfordern, als auch der Besucher beim Auffinden des korrekten Klingelschildes eventuell überfordert würde.

Für solche Wohn- oder Gewerbeanlagen mit vielen Wohn- oder Gewerbeeinheiten haben sich sogenannte Rufdisplays als Türstationen etabliert. Mit Hilfe des Rufdisplays kann der Besucher eine Namensliste aufrufen, den gewünschten Namen auswählen und einen Ruf in die entsprechende Wohn- oder Gewerbeeinheit auslösen, um beispielsweise eine Audioverbindung mit dem Bewohner der Wohneinheit herzustellen, der dann darüber entscheiden kann, ob er dem Besucher Zutritt gewährt, indem er von der Wohnungsstation aus ein elektrisch ansteuerbares Türschloss der Wohnanlage betätigt.

Diese Lösungen haben wiederum den Nachteil, dass sie häufig nicht selbsterklärend und damit kompliziert in der Bedienung sind, so dass es nicht mit dem Gerät vertrauten Besuchern häufig unmöglich ist, den passenden Ruf auszulösen. Es ist daher die Aufgabe der Erfindung, eine Türkommunikationsanlage der zuvor beschriebenen Art derart weiterzuentwickeln, dass sie einfach in der Bedienung ist und insbesondere bei Wohn- oder Gewerbeanlagen mit einer Vielzahl Wohn- oder Gewerbeeinheiten die Rufauslösung in eine gewünschte Wohn- oder Gewerbeeinheit erleichtert.

Diese Aufgabe wird durch eine Türkommunikationsanlage mit den Merkmalen des

Anspruchs 1 gelöst. Der nebengeordnete Anspruch 8 betrifft ein entsprechendes Verfahren für den Rufaufbau zu einer Wohn- oder Gewerbeeinheit der Wohn- oder Gewerbeanlage. Die abhängigen Ansprüche haben jeweils vorteilhafte Ausführungsformen der Erfindung zum Gegenstand.

Weitere Einzelheiten der Erfindung werden anhand der nachstehenden Figuren erläutert. Dabei zeigt:
- Figur 1: eine Türkommunikationsanlage in schematischer Darstellung und gemäß dem Stand der Technik; und
- Figur 2: eine beispielhafte Ausführungsform einer erfindungsgemäßen Türkommunikationsanlage in schematischer Darstellung.

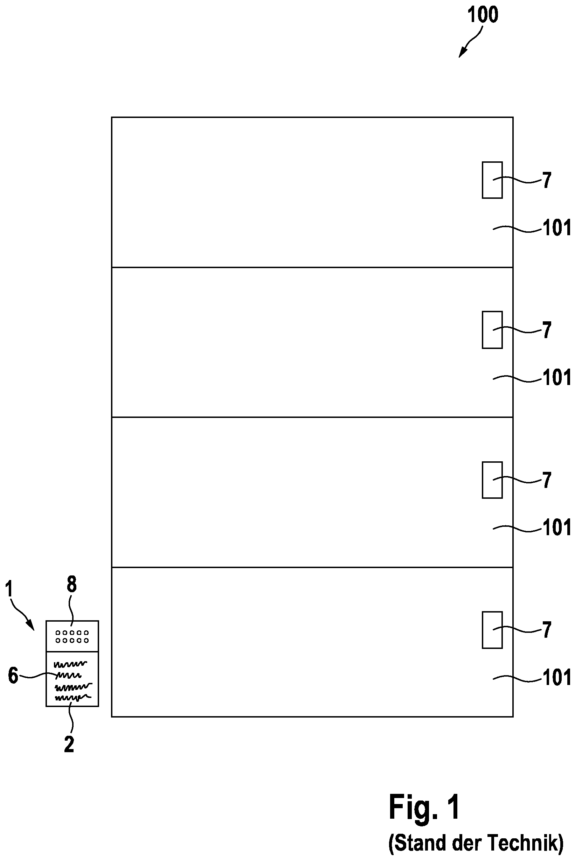

Wie in Figur 1 gezeigt ist, weisen die bekannten Türkommunikationsanlagen für eine Wohnanlage 100 mit einer Vielzahl Wohneinheiten 101 häufig einerseits eine häufig an der Gebäudeaußenwand installierte Türstation 1 mit einem Rufdisplay 2 und weiterhin die Wohnungsstationen 7 in den Wohneinheiten 101 auf. Für den Aufbau einer Audioverbindung weit das Rufdisplay eine Mikrophon-Lautsprecher-Kombination 8 auf. Ein Besucher der Wohnanlage kann über das Rufdisplay 2, welches häufig als berührungssensitives Display ausgebildet ist, manuell eine Kennung der von ihm besuchten Wohneinheit suchen, beispielsweise einen Namen der die Wohneinheit bewohnenden Person. Nachdem der Besucher auf dem Rufdisplay 2 die gewünschte Wohneinheit 101 aufgefunden hat, kann er durch weitere Interaktion mit der Türstation 1 ein Signal für den Rufaufbau zu der betreffenden Wohnungsstation 7 aussenden. Es liegt dann im Ermessen des Bewohners, ob er den Rufaufbau zu der Wohnungsstation 7, gegebenenfalls einschließlich Bildübertragung, freigeben möchte.

Insbesondere da die Türstationen 1 und insbesondere die Rufdisplays 2 der Türstation 1 eine begrenzte Größe aufweisen, ist es bei großen Wohnanlagen 100 mit besonders vielen Wohneinheiten 101 entsprechend aufwendig, die gewünschte Wohneinheit 101 über den Namen der die Wohneinheit besuchenden Person aufzufinden. Dazu muss beispielsweise durch nach Anfangsbuchstaben der Bewohner sortierte Dropdown-Menüs auf dem Rufdisplay 2 durch manuelle Interaktion mit dem Rufdisplay 2 navigiert werden. Viele Besucher überfordert dieser Vorgang.

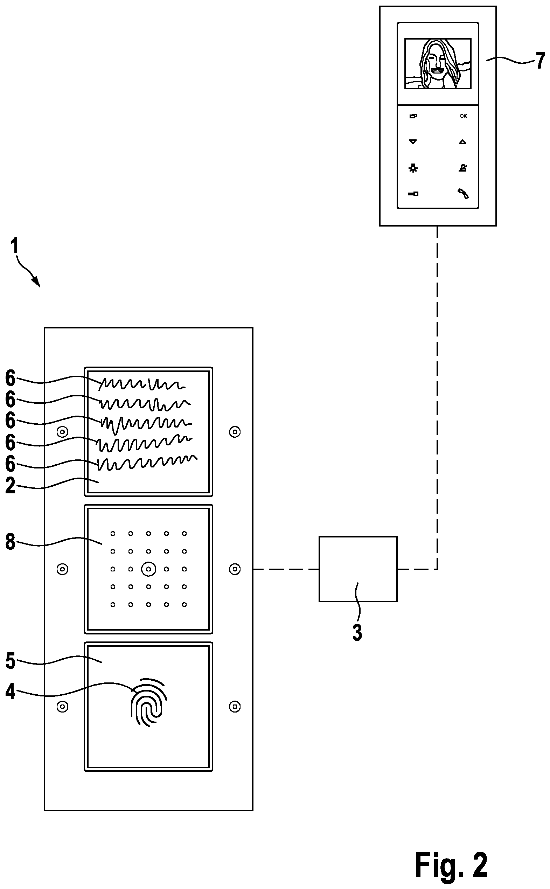

Zur Lösung dieses Problems weist die beispielhafte Ausführungsform der erfindungsgemäßen Türkommunikationsanlage, die in Figur 2 gezeigt ist, eine Türstation 1 mit einem Rufdisplay 2 und einem biometrischen Sensor 5 auf. Der biometrische Sensor 5 ist vorliegend als ein Fingerprint-Sensor und das erfassbare biometrische Charakteristikum 4 demgemäß als ein Fingerabdruck ausgebildet. Die Türkommunikationsanlage weist weiterhin einen Speicher 3 auf, in dem das biometrische Charakteristikum hinterlegt und einer bestimmten Wohneinheit 101 (siehe Figur 1) zugeordnet ist. Die Türkommunikationsanlage ist nun dazu eingerichtet, infolge der Erfassung des in dem Speicher hinterlegten biometrischen Charakteristikums einen Rufaufbau zu der Wohneinheit zu initiieren, dem das betreffende biometrischen Charakteristikum zugeordnet ist.

Bei einem Erstbesuch der Wohnanlage kann es sein, dass das biometrischen Charakteristikum 4 noch nicht in dem Speicher 3 hinterlegt ist und zunächst angelernt werden muss. Dazu kann auf die herkömmliche und mit Bezug auf Figur 1 beschriebene Weise vorgesehen sein, dass der Besucher manuell über das Rufdisplay 2 den Rufaufbau zu der gewünschten Wohneinheit initiiert. Der Bewohner der Wohneinheit kann daraufhin genehmigen, dass der Besucher über den biometrischen Sensor 5 sein persönliches biometrischen Charakteristikum 4 einliest. Ist dies erfolgt, kann das biometrischen Charakteristikum 4 der Wohneinheit zugeordnet und in dem Speicher 3 hinterlegt werden. Wie es aus der biometrischen Datenverarbeitung grundsätzlich bekannt ist, kann aus Sicherheitsgründen vorgesehen sein, dass anstelle des biometrischen Charakteristikums 4 eine daraus abgeleitete Größe in dem Speicher 3 hinterlegt wird.

Für den Rufbaubau kann somit vorgesehen sein, dass das biometrische Charakteristikum 4 an der Türstation 1 der Türkommunikationsanlage einer Wohnanlage erfasst und mit mindestens einem in dem Speicher 3 der Türkommunikationsanlage hinterlegten biometrischen Charakteristikums, das als Referenz-Charakteristikum dient, abgeglichen wird. Das Referenz-Charakteristikum ist einer bestimmten Wohneinheit der Vielzahl Wohneinheiten zugeordnet. Wenn bei dem Abgleichen eine Übereinstimmung zwischen dem erfassten biometrischen Charakteristikums 4 und dem in dem Speicher 3 hinterlegten Referenz-Charakteristikum ermittelt worden ist, kann der Rufaufbau zu der zugeordneten Wohneinheit initiiert werden. Das Initiieren des Rufaufbaus kann das Ausgeben einer akustischen und/oder optischen Ausgabe über die Wohnungsstation der Türkommunikationsanlage, das Anfordern einer Türschlossfreigabe über die Wohnungsstation, oder das Freigeben des Türschlosses der Wohnanlage aufweisen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Türstation
- 2: Rufdisplay
- 3: Speicher
- 4: Biometrisches Charakteristikum
- 5: Biometrischer Sensor
- 6: Kennung
- 7: Wohnungsstation
- 8: Mikrophon/Lautsprecher
- 100: Wohn- oder Gewerbeanlage
- 101: Wohn- oder Gewerbeeinheit

## Patentansprüche

1. Türkommunikationsanlage für eine Wohn- oder Gewerbeanlage (100) mit einer Vielzahl Wohn- oder Gewerbeeinheiten (101), wobei die Türkommunikationsanlage eine Türstation (1) mit einem Rufdisplay (2) und einen Speicher (3) aufweist, wobei in dem Speicher (3) mindestens ein biometrisches Charakteristikum (4) hinterlegt ist, das einer bestimmten Wohn-oder Gewerbeeinheit (101) zugeordnet ist, wobei die Türstation (1) einen biometrischen Sensor (5) zur Erfassung des biometrischen Charakteristikums (4) aufweist, und wobei die Türkommunikationsanlage dazu eingerichtet ist, infolge der Erfassung des biometrischen Charakteristikums (4) einen Rufaufbau zu der Wohneinheit (101) zu initiieren, der das biometrische Charakteristikum (4) zugeordnet ist, **dadurch gekennzeichnet, dass** mehrere biometrische Charakteristika (4) derselben Person, beispielsweise Fingerabdrücke unterschiedlicher Finger derselben Person, in dem Speicher (3) hinterlegbar sind, von denen jedes genau einer der Vielzahl Wohn- oder Gewerbeeinheiten (101) zugeordnet ist.

2. Türkommunikationsanlage nach Anspruch 1, bei der in dem Speicher (3) der Türkommunikationsanlage jeder einer Vielzahl Wohn- oder Gewerbeeinheiten (101) eine eindeutige Kennung (6) zugeordnet ist, die auf dem Rufdisplay (2) graphisch darstellbar ist, wobei eine graphische Darstellung der Kennung (6) beispielsweise mindestens eine Zahl und/oder mindestens einen Schriftzug aufweist.

3. Türkommunikationsanlage nach Anspruch 1 oder 2, bei der der biometrische Sensor (5) ein Fingerprint-Sensor und das biometrische Charakteristikum ein Fingerabdruck, ein Iris-Scanner und das biometrische Charakteristikum ein Bild oder eine optische erfassbare Eigenschaft einer menschlichen Iris, oder eine Kamera und das biometrische Charakteristikum eine Textureigenschaft eines menschlichen Gesichts ist.

4. Türkommunikationsanlage nach einem der vorangegangenen Ansprüche, bei der eine Wohnungsstation (7) der Türkommunikationsanlage eine Anlernfunktion aufweist, die dazu eingerichtet ist, das Anlernen eines biometrischen Charakteristikums (4) mit dem biometrischen Sensor (5) zu initiieren und ein angelerntes biometrisches Charakteristikum (4) in dem Speicher (3) zu hinterlegen und genau einer Wohn- oder Gewerbeeinheit (101) der Vielzahl Wohn- oder Gewerbeeinheiten (101) zuzuordnen.

5. Türkommunikationsanlage nach einem der vorangegangenen Ansprüche, die dazu eingerichtet ist, bei Erfassung eines in dem Speicher (3) hinterlegten biometrischen Charakteristikums (4) über eine Wohnungsstation (7) der Türkommunikationsanlage eine optische und/oder akustische Ausgabe zu erzeugen.

6. Türkommunikationsanlage nach einem der vorangegangenen Ansprüche, die dazu eingerichtet ist, bei Erfassung eines in dem Speicher (3) hinterlegten biometrischen Charakteristikums (4) mit dem Sensor (5) ein Türschloss der Wohn- oder Gewerbeanlage (100) zu entriegeln.

7. Türkommunikationsanlage nach einem der vorangegangenen Ansprüche, die einen ersten biometrischen Sensor (5) im Außenbereich einer Wohn- oder Gewerbeanlage (100) und einen zweiten biometrischen Sensor (5) im Innenbereich der Wohn- oder Gewerbeanlage (100) aufweist, wobei der zweite biometrische Sensor für das Anlernen des biometrischen Charakteristikums (4) eingerichtet ist.

8. Verfahren für den Rufaufbau zu einer bestimmten Wohn- oder Gewerbeeinheit (101) einer Wohn- oder Gewerbeanlage (100) mit einer Vielzahl Wohn- oder Gewerbeeinheiten (101), wobei das Verfahren die Schritte aufweist:
- Anlernen mehrerer biometrischen Charakteristika (4) über einen biometrischen Sensor (5), wobei das Anlernen aufweist:
- Erfassen mehrerer biometrischer Charakteristika (4) derselben Person, beispielsweise das Erfassen jeweils eines Fingerabdrucks unterschiedlicher Finger derselben Person, mit dem biometrischen Sensor (5);
- Zuordnen jedes der erfassten biometrischen Charakteristika (4) genau einer der Wohn- oder Gewerbeeinheiten (101) der Vielzahl Wohn- oder Gewerbeeinheiten (101) der Wohn-oder Gewerbeanlage (100); und
- Hinterlegen der den Wohneinheiten jeweils zugeordneten biometrischen Charakteristika (4) in einem Speicher (3) einer Türkommunikationsanlage;
- Erfassen eines biometrischen Charakteristikums (4) an einer Türstation (1) der Türkommunikationsanlage der Wohn- oder Gewerbeanlage (100);
- Abgleichen des erfassten biometrischen Charakteristikums (4) mit mindestens einem in dem Speicher (3) der Türkommunikationsanlage hinterlegten biometrischen Charakteristikum (4), das einer bestimmten Wohneinheit (101) der Vielzahl Wohn- oder Gewerbeeinheiten (101) zugeordnet ist;
- Initiieren eines Rufaufbaus zu der zugeordneten Wohn- oder Gewerbeeinheit (101), wenn bei dem Abgleichen eine Übereinstimmung des erfassten biometrischen Charakteristikums (4) mit einem in dem Speicher (3) hinterlegten biometrischen Charakteristikum (4) besteht.

9. Verfahren nach Anspruch 8, bei dem das Initiieren eines Rufaufbaus das Ausgeben einer akustischen und/oder optischen Ausgabe über eine Wohnungsstation (7) der Türkommunikationsanlage und/oder das Anfordern einer Türschlossfreigabe über eine Wohnungsstation (7) der Türkommunikationsanlage und/oder das Freigeben eines Türschlosses der Wohn- oder Gewerbeanlage (100) aufweist.

10. Verfahren nach Anspruch 8 oder 9, bei dem das Anlernen mindestens eines biometrischen Charakteristikums (4) das manuelle Auswählen einer graphisch darstellbaren und eindeutigen Kennung (6) einer der Wohn- oder Gewerbeeinheiten (101) auf einer graphischen Anzeige eines Rufdisplays (2) der Türkommunikationsanlage aufweist.

11. Verfahren nach einem der Ansprüche 8 bis 10, bei dem das Erfassen eines biometrischen Charakteristikums (4) das Erfassen mindestens eines Fingerabdrucks mit mindestens einem Fingerprint-Sensor aufweist.

12. Verfahren nach einem der Ansprüche 8 bis 11, bei dem das Erfassen eines biometrischen Charakteristikums (4) das Erfassen des biometrischen Charakteristikums mit einem biometrischen Sensor (5) eines mobilen Endgeräts (7) und das Übertragen des biometrischen Charakteristikums (4) von dem mobilen Endgerät (7) an die Türkommunikationsanlage aufweist, wobei das erfasste biometrische Charakteristikum (4) nach dem Übertragen einer der Wohn- oder Gewerbeeinheiten (101) der Vielzahl Wohn- oder Gewerbeeinheiten (101) zugeordnet wird.

## Claims

1. A door communication system for a residential or commercial complex (100) with a plurality of residential or commercial units (101), wherein the door communication system has a door station (1) with a call display (2) and a memory (3), wherein at least one biometric characteristic (4) is stored in the memory (3) which is assigned to a specific residential or commercial unit (101), wherein the door station (1) has a biometric sensor (5) for detecting the biometric characteristic (4) and wherein the door communication system is adapted to initiate a call setup to the residential unit (101) to which the biometric characteristic (4) is assigned as a result of the detection of the biometric characteristic (4), **characterized in that** a plurality of biometric characteristics (4) of the same person, for example fingerprints of different fingers of the same person, can be stored in the memory (3), each of which is assigned to exactly one of the plurality of residential or commercial units (101).

2. The door communication system according to claim 1, wherein in the memory (3) of the door communication system each of a plurality of residential or commercial units (101) is assigned a unique identifier (6) which can be graphically represented on the call display (2), wherein a graphical representation of the identifier (6) comprises, for example, at least one number and/or at least one lettering.

3. The door communication system of claim 1 or 2, wherein the biometric sensor (5) is a fingerprint sensor and the biometric characteristic is a fingerprint, an iris scanner and the biometric characteristic is an image or an optically detectable feature of a human iris, or a camera and the biometric characteristic is a texture feature of a human face.

4. The door communication system according to any one of the preceding claims, wherein a residential station (7) of the door communication system has a teaching function arranged to initiate teaching of a biometric characteristic (4) with the biometric sensor (5) and to store a taught biometric characteristic (4) in the memory (3) and to assign it to exactly one residential or commercial unit (101) of the plurality of residential or commercial units (101).

5. The door communication system according to any one of the preceding claims, adapted to generate a visual and/or audible output upon detection of a biometric characteristic (4) stored in the memory (3) via a home station (7) of the door communication system.

6. The door communication system according to any one of the preceding claims, adapted to unlock a door lock of the residential or commercial complex (100) upon detection by the sensor (5) of a biometric characteristic (4) stored in the memory (3).

7. The door communication system according to any one of the preceding claims, comprising a first biometric sensor (5) in the exterior of a residential or commercial complex (100) and a second biometric sensor (5) in the interior of the residential or commercial complex (100), wherein the second biometric sensor is adapted for learning the biometric characteristic (4).

8. A method for call setup to a particular residential or commercial unit (101) of a residential or commercial complex (100) having a plurality of residential or commercial units (101), the method comprising the steps of:
- teaching a plurality of biometric characteristics (4) via a biometric sensor (5), the teaching comprising:
- capturing a plurality of biometric characteristics (4) of the same person, for example capturing one fingerprint each of different fingers of the same person, with the biometric sensor (5);
- assigning each of the captured biometric characteristics (4) to exactly one of the residential or commercial units (101) of the plurality of residential or commercial units (101) of the residential or commercial complex (100); and storing the biometric characteristics (4) associated with each of the residential units in a memory (3) of a door communication system; and detecting a biometric characteristic (4) at a door station (1) of the door communication system of the residential or commercial complex (100);
- matching the detected biometric characteristic (4) with at least one biometric characteristic (4) stored in the memory (3) of the door communication system and associated with a particular residential unit (101) of the plurality of residential or commercial units (101); and
- initiating a call setup to the associated residential or commercial unit (101) if, upon matching, there is a match between the detected biometric characteristic (4) and a biometric characteristic (4) stored in the memory (3).

9. The method of claim 8, wherein initiating a call setup comprises issuing an audible and/or visual output via a home station (7) of the door communication system and/or requesting a door lock release via a home station (7) of the door communication system and/or releasing a door lock of the residential or commercial complex (100).

10. The method of claim 8 or 9, wherein teaching at least one biometric characteristic (4) comprises manually selecting a graphically displayable and unique identifier (6) of one of the residential or commercial units (101) on a graphical display of a call display (2) of the door communication system.

11. The method according to any one of claims 8 to 10, wherein capturing a biometric characteristic (4) comprises capturing at least one fingerprint with at least one fingerprint sensor.

12. The method according to any one of claims 8 to 11, wherein detecting a biometric characteristic (4) comprises detecting the biometric characteristic with a biometric sensor (5) of a mobile terminal (7) and transmitting the biometric characteristic (4) from the mobile terminal (7) to the door communication system, wherein the detected biometric characteristic (4) is associated with one of the residential or commercial units (101) of the plurality of residential or commercial units (101) after transmission.

## Revendications

1. Installation de communication de porte pour une installation résidentielle ou commerciale (100), avec une pluralité d'unités résidentielles ou commerciales (101) dans laquelle l'installation de communication de porte comprend une station de porte (1) avec un affichage d'appel (2) et une mémoire (3), dans laquelle, dans la mémoire (3), est enregistré au moins une caractéristique biométrique (4), qui correspond à une unité résidentielle ou commerciale (101) déterminée, dans laquelle la station de porte (1) comprend un capteur biométrique (5) pour la détection de la caractéristique biométrique (4), et dans laquelle l'installation de communication de porte est conçue pour initier, à la suite de la détection de la caractéristique biométrique (4), un appel vers l'unité résidentielle (101) à laquelle correspond la caractéristique biométrique (4), **caractérisée en ce que** plusieurs caractéristiques biométriques (4) de la même personne, par exemple des empreintes digitales de différents doigts de la même personne, peuvent être enregistrées dans la mémoire (3), dont chacune correspond exactement à une de la pluralité d'unités résidentielles ou commerciales (101).

2. Installation de communication de porte selon la revendication 1, dans laquelle, dans la mémoire (3) de l'installation de communication de porte, à chacun d'une pluralité d'unités résidentielles ou commerciales (101), correspond un identifiant unique (6) qui peut être représenté graphiquement sur l'affichage d'appel (2), dans laquelle une représentation graphique de l'identifiant (6) comprend par exemple au moins un chiffre et/ou au moins une inscription.

3. Installation de communication de porte selon la revendication 1 ou 2, dans laquelle le capteur biométrique (5) est un capteur d'empreintes digitales et la caractéristique biométrique est une empreinte digitale, un scanner d'iris et la caractéristique biométrique est une image ou une propriété détectable optiquement d'un iris humain ou une caméra et le la caractéristique biométrique est une propriété de texture d'un visage humain.

4. Installation de communication de porte selon l'une des revendications précédentes, dans laquelle une station résidentielle (7) de l'installation de communication comprend une fonction d'apprentissage qui est conçue pour initier l'apprentissage d'une caractéristique biométrique (4) avec le capteur biométrique (5) et pour enregistrer une caractéristique biométrique (4) apprise dans la mémoire (3) et pour l'attribuer à exactement une unité résidentielle ou commerciale (101) de la pluralité d'unités résidentielles ou commerciales (101).

5. Installation de communication de porte selon l'une des revendications précédentes, qui est conçue pour générer, lors de la détection d'une caractéristique biométrique (4) enregistrée dans la mémoire (3), par l'intermédiaire d'une station résidentielle (7) de l'installation de communication de porte, une sortie optique et/ou acoustique.

6. Installation de communication de porte selon l'une des revendications précédentes, qui est conçue pour déverrouiller, lors de la détection d'une caractéristique biométrique (4) enregistrée dans la mémoire (3), avec le capteur (5), une serrure de porte de l'installation résidentielle ou commerciale (100).

7. Installation de communication de porte selon l'une des revendications précédentes, qui comprend un premier capteur biométrique (5) à l'extérieur d'une installation résidentielle ou commerciale (100) et un deuxième capteur biométrique (5) à l'intérieur de l'installation résidentielle ou commerciale (100), dans laquelle le deuxième capteur biométrique est conçu pour l'apprentissage de la caractéristique biométrique (4).

8. Procédé d'établissement d'un appel vers une unité résidentielle ou commerciale (101) d'une installation résidentielle ou commerciale (100) avec une pluralité d'unités résidentielles ou commerciales (101), dans lequel le procédé comprend les étapes suivantes :
- apprentissage de plusieurs caractéristiques biométriques (4) par l'intermédiaire d'un capteur biométrique (5), dans lequel l'apprentissage comprend :
- détection de plusieurs caractéristiques biométriques (4) de la même personne, par exemple détection d'une empreinte digitale de différents doigts de la même personne, avec le capteur biométrique (5) ;
- attribution des caractéristiques biométriques (4) détectées à exactement une des unités résidentielle ou commerciales (101) de la pluralité d'unités résidentielle ou commerciales (101) de l'installation résidentielle ou commerciale (100) ; et
- enregistrement des caractéristiques biométriques (4) attribuées respectivement aux unités résidentielles dans une mémoire (3) d'une installation de communication de porte ;
- détection d'une caractéristique biométrique (4) au niveau d'une station de porte (1) de l'installation de communication de porte de l'installation résidentielle ou commerciale (100) ;
- comparaison de la caractéristique biométrique (4) détectée avec au moins une caractéristique biométrique (4) enregistrée dans la mémoire (3) de l'installation de communication de porte, qui correspond à une unité résidentielle (101) déterminée de la pluralité d'unités résidentielles ou commerciales (101) ;
- initiation d'un établissement d'appel vers l'unité résidentielle ou commerciale (101) si, lors de la comparaison, une correspondance existe entre la caractéristique biométrique (4) détectée et une caractéristique biométrique (4) enregistrée dans la mémoire (3).

9. Procédé selon la revendication 8, dans lequel l'initiation d'un établissement d'appel comprend la production d'une sortie acoustique et/ou optique par l'intermédiaire d'une station résidentielle (7) de l'installation de communication de porte et/ou la demande d'un déverrouillage de serrure de porte par l'intermédiaire d'une station résidentielle (7) de l'installation de communication de porte et/ou le déverrouillage d'une serrure de porte de l'installation résidentielle ou commerciale (100).

10. Procédé selon la revendication 8 ou 9, dans lequel l'apprentissage d'au moins une caractéristique biométrique (4) comprend la sélection manuelle d'un identifiant unique (6), pouvant être représenté graphiquement, d'une des unités résidentielles ou commerciales (101) sur un affichage graphique d'un affichage d'appel (2) de l'installation de communication de porte.

11. Procédé selon l'une des revendications 8 à 10, dans lequel la détection d'une caractéristique biométrique (4) comprend la détection d'au moins une empreinte digitale avec au moins un capteur d'empreintes digitales.

12. Procédé selon l'une des revendications 8 à 11, dans lequel la détection d'une caractéristique biométrique (4) comprend la détection de la caractéristique biométrique avec un capteur biométrique (5) d'un terminal mobile (7) et la transmission de la caractéristique biométrique (4) du terminal mobile (7) à l'installation de communication de porte, dans lequel la caractéristique biométrique (4) détectée est attribuée, après la transmission, à une des unités résidentielles ou commerciales (101) de la pluralité d'unités résidentielles ou commerciales (101).
